# EUROPEAN PATENT APPLICATION

(11) **EP 4 096 226 A1**
(43) Date of publication of application: **30.11.2022**
(21) Application number: 21896660.4
(22) Date of filing: 21.10.2021
(51) Int. Cl.: H04N 21/24, H04N 21/64

(54) **FAULT DETECTION METHOD AND APPARATUS FOR LIVE BROADCAST SERVICE, ELECTRONIC DEVICE, AND READABLE STORAGE MEDIUM**

(30) Priority: 26.11.2020 CN 202011353775
(71) Applicant: Beijing Baidu Netcom Science Technology Co., Ltd., Beijing 100085 (CN)
(72) Inventor: LENG, Bingxin, Beijing 100085 (CN)
(74) Representative: Studio Torta S.p.A.
(86) International application number: PCT/CN2021/125349
(87) International publication number: WO 2022/111158

(57) **Abstract**

A method, a device, an electronic device and a readable storage medium for detecting a fault of a live stream service are disclosed, and relate to the technical field of cloud services and big data. The method specifically includes: obtaining log data of a live stream service; performing statistics on the log data according to a plurality of dimensions to be detected, to obtain log statistics data in each of the plurality of dimensions; analyzing the log statistics data in each of the plurality of dimensions respectively to obtain an analysis result; determining whether a live link portion corresponding to the log statistics data in each of the plurality of dimensions has a fault, according to the analysis result.

## Description

### CROSS-REFERENCE TO RELATED APPLICATION

This application claims a priority to Chinese Patent Application No. 202011353775.9 filed on November 26, 2020, the disclosures of which are incorporated in their entirety by reference herein.

### TECHNICAL FIELD

The present application relates to the field of computer technology, and in particular, to a cloud service and big data technology.

### BACKGROUND

A live stream service, as a cloud service with more and more extensive applications, has penetrated into all walks of life, but in a process of the live stream, faults such as black screen and freezing often occur, which seriously affect user experience. For the faults in the live stream service, a user usually informs the faults to a service provider after being aware of the faults, and then the service provider detects and locates the faults.

### SUMMARY

The present disclosure provides a method, a device, an electronic device and a readable storage medium for detecting a fault of a live stream service.

According to an aspect of the present disclosure, there is provided a method of detecting a fault of a live stream service. The method includes: obtaining log data of a live stream service; performing statistics on the log data according to a plurality of dimensions to be detected, to obtain log statistics data in each of the plurality of dimensions; analyzing the log statistics data in each of the plurality of dimensions respectively to obtain an analysis result; determining whether a live link portion corresponding to the log statistics data in each of the plurality of dimensions has a fault, according to the analysis result.

According to another aspect of the present disclosure, there is provided a device of detecting a fault of a live stream service. The device includes: an obtaining module, configured to obtain log data of a live stream service; a statistics module, configured to perform statistics on the log data according to a plurality of dimensions to be detected, to obtain log statistics data in each of the plurality of dimensions; an analysis module, configured to analyze the log statistics data in each of the plurality of dimensions respectively to obtain an analysis result; a determination module, configured to determine whether a live link portion corresponding to the log statistics data in each of the plurality of dimensions has a fault, according to the analysis result.

According to another aspect of the present disclosure, there is provided an electronic device. The electronic device includes: at least one processor, and a storage communicatively coupled to the at least one processor, wherein, the storage stores instructions executable by the at least one processor, the instructions are executed by the at least one processor in order to enable the at least one processor to perform the method described above.

According to another aspect of the present disclosure, there is provided a non-transitory computer readable storage medium including computer instructions on the non-transitory computer-readable storage medium, wherein the computer instructions are used for causing a computer to perform the method described above.

The technologies of the present application solve the problem that current fault detection efficiency of a live stream service is low, and the fault detection efficiency is improved.

It should be understood that what is described in this section is not intended to identify key or important features of embodiments of the present disclosure, nor is it intended to limit the scope of the present disclosure. Other features of the present disclosure will be readily understood by the following description.

### BRIEF DESCRIPTION OF THE DRAWINGS

Drawings are used for better understanding of the present disclosure, but do not constitute limitation of the present application.
Fig. 1 is a schematic diagram of a live stream link in an embodiment of the present application;
Fig. 2 is a schematic diagram of a log collection scheme in an embodiment of the present application;
Fig. 3 is a schematic diagram of a log collection process in an embodiment of the present application;
Fig. 4 is a schematic diagram of a method of detecting a fault of a live stream service in an embodiment of the present application;
Fig. 5 is a schematic diagram of a scheme of detecting and locating a fault in an embodiment of the present application;
Fig. 6 is a schematic diagram of a data presentation process in an embodiment of the present application;
Fig. 7 is a block diagram of a device of detecting a fault of a live stream service in an embodiment of the present application;
Fig. 8 is a block diagram of an electronic device for implementing a method of detecting a fault of a live stream service in an embodiment of the present application.

### DETAILED DESCRIPTION

The following describes exemplary embodiments of the present application in conjunction with accompanying drawings. Various details of the embodiments of the present application are included therein to aid in understanding and should be considered to be exemplary only. Accordingly, those of ordinary skills in the art will recognize that various changes and modifications may be made to the embodiments described herein without departing from the scope and the spirit of the present application. Also, descriptions of well-known functions and structures are omitted in the following description for purpose of clarity and conciseness.

Such terms as "first", "second," etc. in the specification and the claims of the present application are used to distinguish similar objects and need not be used to describe a particular order or sequence. It should be understood that terms used in such a way may be interchanged where appropriate so that the embodiments of the present application described herein may be implemented in an order other than those illustrated or described herein. In addition, such terms as "comprising" and "having" and any variations thereof are intended to cover non-exclusive inclusions, for example, a process, a method, a system, a product or a device including a series of steps or units needs not be limited to those steps or units clearly listed, but may include other steps or units not explicitly listed or inherent to these processes, methods, products or devices. In the description and the claims, "and/or" means at least one of the connected objects. In order to facilitate understanding of the embodiments of the present application, the following is first explained.

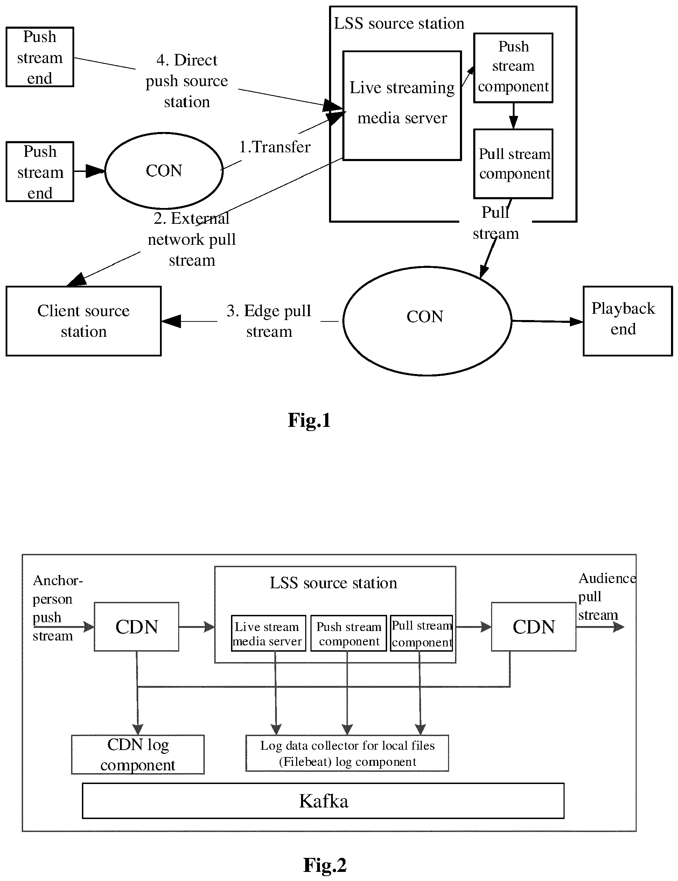

In an embodiment of the present application, as shown in Fig. 1, a live stream link of a live stream service may include, but is not limited to, a push stream end, a content delivery network (Content Delivery Network, CDN) on a push stream side, a live streaming service (Live Streaming Service, LSS) source station, a client source station, a playback end, and a CDN on a pull stream side, etc. The LSS source station may include a live streaming media server (liveSrs), a push stream component (inner) and a pull stream component (outer). The CDN on the push stream side may transfer a live stream on the push stream side to the liveSrs of the LSS source station. The push stream end may push the live stream to the liveSrs of the LSS source station via a direct push source station. The client source station may obtain the live stream from the liveSrs of the LSS source station through an external network pull stream, and/or obtain the live stream from the CDN on the pull stream side through an edge pull stream. The CDN on the pull stream side may obtain the live stream through the liveSrs, inner and outer of the LSS source station and push the live stream to the playback end.

In order to efficiently detect and locate a fault of a live stream service, a log system established in the embodiment of the present application may integrate log data on the push stream side, the CDN side and the pull stream side, and uniformly manage and store the log data, so as to support searching and tracking of full-link log data. As shown in Fig. 2, when collecting the log data, the embodiment of the present application can fully collect log data in network components and machines involved in a live stream link, for example, for CDNs on the push stream side and the pull stream side, a CDN log component can be used to collect log data; for the LSS source station, FileBeat (a log data collector for local files) can be used as the log collection component. Filebeat is a lightweight transport tool for forwarding and integrating log data, may monitor specified log files or locations and collect log events. The log system in this embodiment may integrate and process log data using Kafka (a distributed stream processing platform).

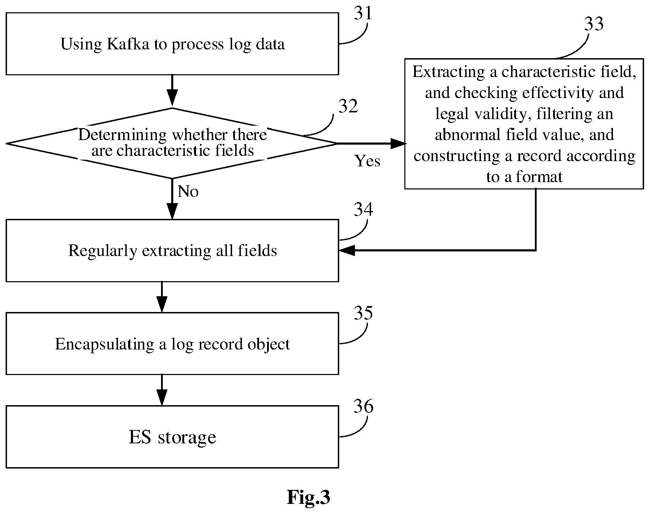

Optionally, as shown in Fig. 3, the log collection process in this embodiment may include: S31, integrating log data using Kafka for full live stream links; S32, according to scene characteristics, determining whether there are characteristic fields in the log data, for example, whether there are fields such as push stream failure, data packet retransmission, and the like in corresponding log data under an anchor-person push stream scene, or whether there are fields such as domain-name analysis failure in corresponding log data under a third-party source station pull stream scene; S33: if there is a characteristic field, then extracting the characteristic field, checking effectivity and legal validity of the extracted characteristic field, filtering an abnormal field value, and constructing a log extracting record according to a predetermined format; S34, if there is no characteristic field, then regularly extracting all fields; S35, encapsulating a log record object; S36, storing the log record object. Here, the storing can be to store data using a distributed document database ES (Elasticsearch) and ensure uniqueness of the storing. The data stored here, i.e. log data, can be used for detecting and locating a fault of the live stream service.

The embodiment of the present application will be described hereinafter in detail with reference to the attached drawings.

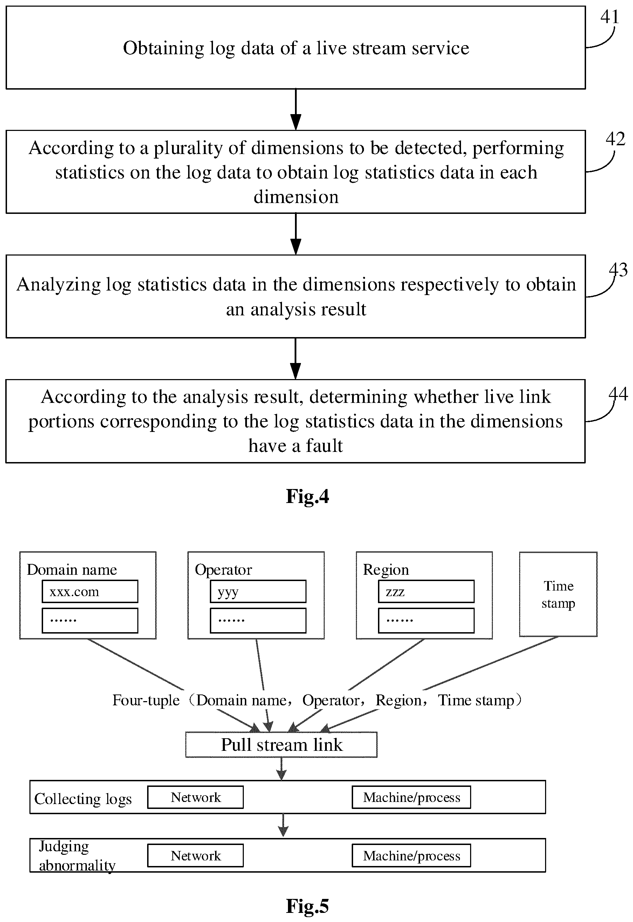

Referring to Fig. 4. Fig. 4 is a flowchart of a method of detecting a fault of a live stream service provided in an embodiment of the present application. This method is executed by an electronic device, and as shown in Fig. 4, the method includes the following steps 41-44_{∘}

Step 41: obtaining log data of a live stream service.

The embodiments of the present application can be applied to a scenario of detecting and locating a fault of a live stream service. Live stream services may include, but are not limited to, an event live stream, an information live stream, an entertainment live stream, a game live stream, etc. This step can obtain required log data from full log data collected by the log system.

Step 42: according to a plurality of dimensions to be detected, performing statistics on the log data to obtain log statistics data in each dimension.

In the embodiment of the present application, the plurality of dimensions may include, but are not limited to, at least two of the following: a domain name, an operator, a region, a live stream, etc. The domain name is also called a network domain, which is a name of a computer in a network composed of a series of names separated by dots, such as xxx.com, and may involve multiple live streams. Different live streams may be distinguished by respective identities such as ID1, ID2, etc. An operator may be understood as a provider of live stream services, and quality of service provided by different operators at the same time and at the same place is usually different. Regions can be divided based on different provinces, cities, etc.

Step 43: analyzing log statistics data in the dimensions respectively to obtain an analysis result.

Optionally, when the log statistics data is analyzed, live stream status indicators in the log statistics data may be analyzed. The live stream status indicators may include, but are not limited to, a frame rate, a black screen rate, a freezing rate, a Central Processing Unit (CPU) utilization rate, a network card utilization rate, and the like. The live stream status indicator may be embodied by a tag field in the log data.

In one embodiment, the analysis result may be the frame rate, the black screen rate, and/or the freezing rate in the log statistics data.

Step 44: according to the analysis result, determining whether live link portions corresponding to the log statistics data in the dimensions have a fault.

Optionally, this step of determining may be performed in combination with service characteristics when determining whether there is a fault in a live link portion. For example, compared with the information live stream, real-time requirement of the game live stream will be higher, and if the fault is judged based on the freezing rate, freezing rate requirement of the game live stream will be higher than that of the information live stream.

The live link portion corresponding to the log statistics data in each dimension can be understood as a live link portion matching each dimension. For example, taking a domain name YYY.com as an example, the live link portion corresponding to the log statistics data for the YYY.com is the live link portion matching the YYY.com; or taking an operator 1 as an example, the live link portion corresponding to the log statistics data for the operator 1 is the live link portion matching the operator 1; or take a live stream ID1 as an example, the live link portion corresponding to the log statistics data for the live stream ID1 is the live link portion matching the live stream ID1.

In the method of detecting a fault according to the embodiments of the present application, log data of a live stream service is obtained, the log data is counted according to a plurality of dimensions to be detected, and log statistics data in each dimension is obtained, the log statistics data for the dimensions is analyzed respectively, and whether there is a fault in a live link portion corresponding to the log statistics data in each dimension is determined according to the result of the analyzing. Fault detection and location of the live link portion matching different dimensions can be actively realized, thereby improving a fault detection efficiency.

For example, as shown in Fig. 5, for a pull stream link of a certain live stream service, a four-tuple (a domain name (domain), an operator sim, a region prov, a time stamp ts) may be adopted, that is, the log data of the pull stream link in a corresponding time period is analyzed to judge fault abnormality.

In the embodiment of the present application, since the smoother the live stream link is, the smaller the probability of fault of the corresponding live stream link is, whether there is a fault can be determined according to smoothness of a live stream. Optionally, the process of analyzing the log statistics data in each dimension respectively to obtain the analysis result may include: extracting live stream status indicators from the log statistics data in the dimensions respectively; wherein, the live stream status indicators may include, but are not limited to, a frame rate, a black screen rate, a freezing rate, etc.; according to the extracted live stream status indicators, determining smoothness of the live link portion corresponding to the log statistics data in each dimension.

It should be pointed out that, taking as an example the extracted live stream status indicators including the frame rate, the black screen rate and the freezing rate, the corresponding smoothness can be obtained by performing calculation using the frame rate, the black screen rate and the freezing rate according to a service scenario and pre-configuration. The method of calculating the smoothness is not limited in the embodiments of the present application, and may be configured based on actual requirements.

Optionally, after the smoothness is determined, it may be determined whether there is a fault in the corresponding live link portion by comparing the smoothness with a preset threshold. For example, assuming that the determined smoothness of a live link portion 1 is 'a' and the preset threshold value is K, and if 'a' is greater than or equal to K, then it may be determined that there is no fault in the live link portion 1, else if 'a' is less than K, then it can be determined that there is a fault in the live link portion 1. In this way, with the aid of smoothness, it can be accurately determined whether there is a fault in the corresponding link.

In the embodiments of the present application, in order to facilitate the user to understand a fault situation and reduce a cost of troubleshooting time, fault-related information may be displayed, for example, through charts, texts and the like. Optionally, the method of detecting a fault in the embodiment of the present application may further include: presenting, for each of the dimensions, at least one of the following on a preset page:
live stream status indicators extracted from log statistics data in each dimension;
smoothness of a live link portion corresponding to the log statistics data in each dimension;
whether there is a fault in the live link portion corresponding to the log statistics data in each dimension.

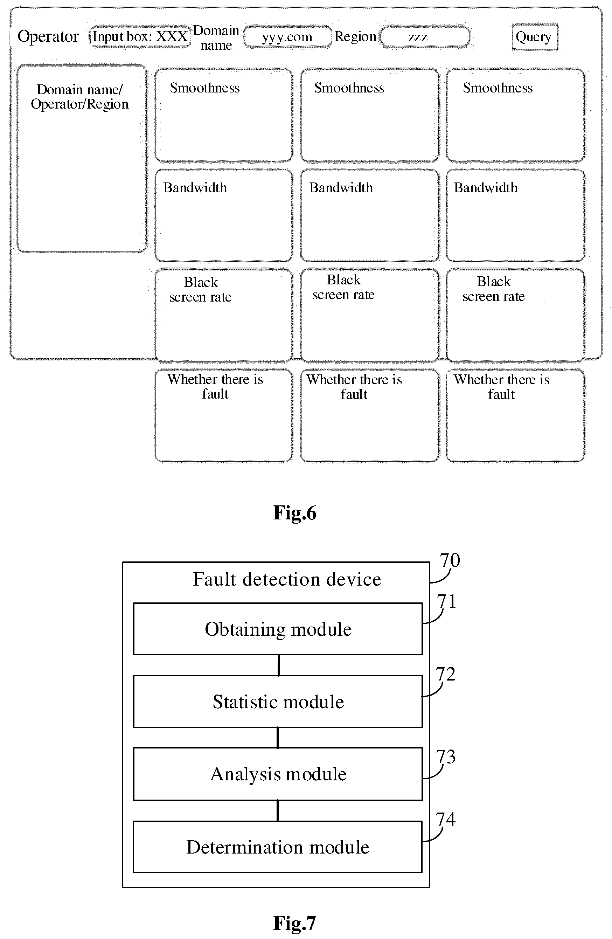

Referring to Fig. 6, in case that the dimensions to be detected include an operator, a domain name, a region, the preset pages shown in Fig. 5 can be used to respectively display the smoothness, the bandwidth, the black screen rate, and whether there is a fault, of the live link portions matching an operator xxx, a domain name yyy.com, and a region zzz.

In this way, with the help of a display function, the user can know the fault situation conveniently, and the cost of troubleshooting the fault is reduced. In a specific example, original several tens of minutes required for manual fault troubleshooting can be shortened to several minutes through the scheme of the present application.

Optionally, in order to facilitate the user to know whether there is a live stream fault in real time, latest log data of a live stream service may be obtained every preset time, such as 5 minutes or 6 minutes. The step 41 may include obtaining the log data of the live stream service at a preset time interval. The preset time interval may be set based on actual requirements.

Referring to Fig. 7. Fig. 7 is a schematic structural diagram of a device of detecting a fault of a live stream service according to an embodiment of the present application, and as shown in Fig. 7, the device 70 of detecting a fault includes an obtaining module 71, a statistic module 72, an analysis module 73, and a determination module 74.

The obtaining module 71 is configured to obtain log data of a live stream service. The statistics module 72 is configured to, according to a plurality of dimensions to be detected, perform statistics on the log data to obtain log statistics data in each dimension. The analysis module 73 is configured to analyze log statistics data in the dimensions respectively to obtain an analysis result. The determination module 74 is configured to, according to the analysis result, determine whether live link portions corresponding to the log statistics data in the dimensions have a fault.

Optionally, the analysis module 73 includes: an extracting unit, configured to extract live stream status indicators from the log statistics data in the dimensions respectively; a determination unit, configured to, according to the extracted live stream status indicators, determine smoothness of the live link portion corresponding to the log statistics data in each dimension.

Optionally, the device 70 of detecting a fault further includes a presentation module, configured to present, for each of the dimensions, at least one of the following on a preset page: live stream status indicators extracted from log statistics data in each dimension; smoothness of a live link portion corresponding to the log statistics data in each dimension; whether there is a fault in the live link portion corresponding to the log statistics data in each dimension.

Optionally, the plurality of dimensions may include at least two of the following: a domain name, an operator, a region, a live stream.

Optionally, the obtaining module 71 is specifically configured to obtain the log data of the live stream service at a preset time interval.

It should be understood that the device 70 of detecting a fault of the live stream service according to the embodiment of the present application can implement various processes implemented in the method embodiment shown in Fig. 4 and achieve the same beneficial effects. To avoid repetition, the various processes will not be repeated here.

According to the embodiments of the present application, the present application also provides an electronic device and a readable storage medium.

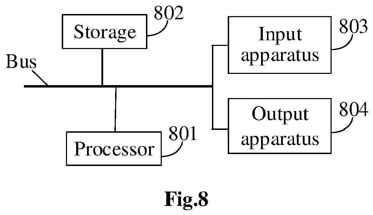

Fig. 8 is a block diagram of an electronic device for the method of detecting a fault of a live stream service according to an embodiment of the present application. Electronic devices are intended to represent various forms of digital computers, such as, laptop computers, desktop computers, workstations, personal digital assistants, servers, blade servers, mainframe computers, and other suitable computers. Electronic devices may also represent various forms of mobile devices, such as personal digital processing, cellular telephones, smart phones, wearable devices, and other similar computing devices. The components, their connections and relationships, and their functionality shown herein are used as examples only and are not intended to limit implementation of the present application described and/or claimed herein.

As shown in Fig. 8, the electronic device includes one or more processors 801, a storage 802, and interfaces for connecting various components, including a high speed interface and a low speed interface. The various components are connected to each other using different buses and may be mounted on a common motherboard or in other ways as desired. The one or more processors may process instructions executed within the electronic device, the instructions includes instructions stored in or on the storage for displaying graphical information of a GUI on external input/output devices (such as, a display device coupled to the interface). In other embodiments, multiple processors and/or multiple buses may be used together with multiple memories and multiple storages, if desired. A plurality of electronic devices may be connected, each providing part of necessary operations (e.g., used as a server array, a group of blade servers, or a multi-processor system). In Fig. 8, a processor 801 is taken as an example.

The storage 802 is a non-transitory computer readable storage medium provided herein. The storage stores instructions executable by at least one processor to cause the at least one processor to perform a method of detecting a fault of a live stream service provided herein. The non-transitory computer readable storage medium of the present application stores computer instructions for causing a computer to perform the method of detecting a fault of a live stream service provided herein.

The storage 802 serves as a non-transitory computer-readable storage medium for storing non-transitory software programs, non-transitory computer executable programs and modules, for example, the program instructions/modules (for example, the obtaining module 71, the statistics module 72, the analysis module 73 and the determination module 74 shown in Fig. 7) corresponding to the method of detecting a fault of the live stream service in the embodiments of the present application. The processor 801 performs various functional applications of the server and data processing by executing non-transitory software programs, instructions, and modules stored in the storage 802. That is, the method of detecting a fault of the live stream service in the above method embodiment is implemented.

The storage 802 may include a program storage area and a data storage area, wherein, the program storage rea may store an operating system, an application program required by at least one function, and the data storage area may store data created by using an electronic device of detecting a fault of a live stream service, and the like. In addition, the storage 802 may include high speed random access memory and may also include a non-transitory memory, such as at least one disk storage device, a flash memory device, or other non-transitory solid state storage device. In some embodiments, the storage 802 may optionally include a storage located remotely with respect to the processor 801, the storage located remotely may be connected via a network to the electronic device of detecting a fault. Examples of such networks include, but are not limited to, the Internet, intranets, local area networks, mobile communication networks, and combinations thereof.

The electronic device of detecting a fault of a live stream service may further include an input apparatus 803 and an output apparatus 804. The processor 801, the storage 802, the input apparatus 803, and the output storage 804 may be connected by a bus or other means, for example in Fig. 8, connection by a bus is taken as an example.

The input apparatus 803 may receive input numeric or character information and generate key signal inputs related to user settings and function controls of the electronic device of detecting a fault, such as, may be a touch screen, a keypad, a mouse, a trackpad, a touchpad, a pointing stick, one or more mouse buttons, a trackball, a joystick, and the like. The output apparatus 804 may include a display apparatus, an auxiliary lighting apparatus (, for example, an LED), and a haptic feedback apparatus (for example, a vibration electronic motor), and the like. The display apparatus may include, but is not limited to, a liquid crystal display (LCD), a light emitting diode (LED) display, and a plasma display. In some embodiments, the display apparatus may be a touch screen.

Various embodiments of systems and techniques described herein may be implemented in digital electronic circuit systems, integrated circuit systems, application specific integrated circuits (ASICs), computer hardware, firmware, software, and/or a combination thereof. Such various embodiments may include: being embodied in one or more computer programs, the one or more computer programs may be executed and/or interpreted on a programmable system including at least one programmable processor, The programmable processor, which may be a special purpose or general purpose programmable processor, may receive data and instructions from a storage system, at least one input apparatus, and at least one output apparatus, and transmit data and instructions to the storage system, the at least one input apparatus, and the at least one output apparatus.

These computing programs (also referred to as programs, software, software applications, or codes) include machine instructions of a programmable processor, and these computing programs may be implemented using an advanced process-oriented and/or object oriented programming language, and/or an assembly language/a machine language. As used herein, such terms as "machine-readable medium" and "computer-readable medium" refer to any computer program product, device, and/or apparatus for providing machine instructions and/or data to a programmable processor (e.g., a magnetic disk, an optical disk, a memory, a programmable logic device (PLD), including a machine-readable medium that receives machine instructions as machine-readable signals. The term "machine-readable signals" means any signal used to provide machine instructions and/or data to a programmable processor.

To enable interaction with a user, the systems and the techniques described herein may be implemented on a computer. The computer has a display device for displaying information to a user (e.g., a CRT (cathode ray tube) or LCD (liquid crystal display) monitor), and a keyboard and a pointing device (such as a mouse or trackball) through which a user can provide input to the computer. Other kinds of devices may also be used to provide interaction with the user; for example, feedback provided to the user may be any form of sensory feedback (e.g., visual feedback, auditory feedback, or tactile feedback); and may receive input from a user in any form, including acoustic input, voice input, or tactile input.

The systems and techniques described herein may be implemented in a computing system that includes a background component (for example, as a data server), or a computing system that includes a middleware component (for example, an application server), or a computing system that includes a front-end component (e.g., a user computer with a graphical user interface or a web browser, a user may interact with embodiments of the systems and techniques described herein through the graphical user interface or the web browser), or a computing system that includes any combination of the background component, the middleware component, or the front-end component.

The components of the system may be interconnected by any form or medium of digital data communication, such as communication networks. Examples of communication networks include a local area network (LAN), a wide area network (WAN) and the Internet.

The computing systems may include a client and a server. The client and the server are generally remote from each other and typically interact through a communication network. Relationship between the client and the server is generated by computer programs running on a respective computer and having a client-server relationship to each other, the server also being a server of the distributed system, or a server that incorporates the block chain.

According to the technical solutions of the embodiments of the present application, by obtaining log data of a live stream service, counting the log data in a plurality of to-be-detected dimensions to obtain log statistical data in each dimension, and respectively analyzing the log statistical data in each dimension, and determining whether there is a fault in the live link portion corresponding to the log statistical data in each dimension according to the analysis result, fault detection and location of the live link portions matching different dimensions can be realized actively, thus improving a fault detection efficiency.

It should be understood that steps may be reordered, added, or deleted using various forms of flows shown above. For example, the steps described in the present application may be executed in parallel or sequentially or in a different order as long as a desired result of the technical solutions disclosed in the present application can be achieved. This document is not intended to be limiting.

The above specific embodiments do not limit the protection scope of the present application. It will be apparent to those skilled in the art that various modifications, combinations, sub-combinations and substitutions may be made depending on design requirements and other factors. Any modification, equivalent substitution and improvement made within the spirit and principles of the present application should be included within the protection scope of the present application.

## Claims

1. A method of detecting a fault of a live stream service, comprising:
obtaining log data of a live stream service;
performing statistics on the log data according to a plurality of dimensions to be detected, to obtain log statistics data in each of the plurality of dimensions;
analyzing the log statistics data in each of the plurality of dimensions respectively to obtain an analysis result;
determining whether a live link portion corresponding to the log statistics data in each of the plurality of dimensions has a fault, according to the analysis result.

2. The method according to claim 1, wherein analyzing the log statistics data in each of the plurality of dimensions respectively to obtain the analysis result, comprises:
extracting one or more live stream status indicators from the log statistics data in each of the plurality of dimensions, respectively;
determining smoothness of the live link portion corresponding to the log statistics data in each of the plurality of dimensions, according to the extracted one or more live stream status indicators.

3. The method according to claim 2, further comprising:
presenting, for each of the plurality of dimensions, at least one of the following on a preset page:
the one or more live stream status indicators extracted from the log statistics data in each of the plurality of dimensions;
smoothness of a live link portion corresponding to the log statistics data in each of the plurality of dimensions;
whether there is a fault in the live link portion corresponding to the log statistics data in each of the plurality of dimensions.

4. The method according to claim 1, wherein the plurality of dimensions comprises at least two of following:
a domain name, an operator, a region, a live stream.

5. The method according to claim 1, wherein obtaining the log data of the live stream service comprises:
obtaining the log data of the live stream service at a preset time interval.

6. A device of detecting a fault of a live stream service, comprising:
an obtaining module, configured to obtain log data of a live stream service;
a statistics module, configured to perform statistics on the log data according to a plurality of dimensions to be detected, to obtain log statistics data in each of the plurality of dimensions;
an analysis module, configured to analyze the log statistics data in each of the plurality of dimensions respectively to obtain an analysis result;
a determination module, configured to determine whether a live link portion corresponding to the log statistics data in each of the plurality of dimensions has a fault, according to the analysis result.

7. The device according to claim 6, wherein the analysis module comprises:
an extracting unit, configured to extract one or more live stream status indicators from the log statistics data in each of the plurality of dimensions, respectively;
a determination unit, configured to determine smoothness of the live link portion corresponding to the log statistics data in each of the plurality of dimensions, according to the extracted one or more live stream status indicators.

8. The device according to claim 7, further comprising:
a presentation module, configured to present, for each of the plurality of dimensions, at least one of the following on a preset page:
the one or more live stream status indicators extracted from the log statistics data in each of the plurality of dimensions;
smoothness of a live link portion corresponding to the log statistics data in each of the plurality of dimensions;
whether there is a fault in the live link portion corresponding to the log statistics data in each of the plurality of dimensions.

9. The device according to claim 6, wherein the plurality of dimensions comprises at least two of following:
a domain name, an operator, a region, a live stream.

10. The device according to claim 6, wherein the obtaining module is specifically configured to:
obtain the log data of the live stream service at a preset time interval.

11. An electronic device, comprising:
at least one processor, and
a storage communicatively coupled to the at least one processor, wherein,
the storage stores instructions executable by the at least one processor, the instructions are executed by the at least one processor in order to enable the at least one processor to perform the method according to any one of claims 1-5.

12. A non-transitory computer-readable storage medium, comprising:
computer instructions on the non-transitory computer-readable storage medium, wherein the computer instructions are used for causing a computer to perform the method according to any one of claims 1-5.

13. A computer program product, wherein, when the computer program product is executed by at least one processor, the at least one processor implements the method according to any one of claims 1-5.

14. A fault detection device, wherein, the fault detection device is configured to or is used to perform the method according to any one of claims 1-5.
